# EUROPÄISCHE PATENTSCHRIFT

(11) **EP 3 337 989 B1**
(45) Veröffentlichungstag und Bekanntmachung des Hinweises auf die Patenterteilung: **07.08.2019**
(21) Anmeldenummer: 16754392.5
(22) Anmeldetag: 08.06.2016
(51) Int. Cl.: F16C 19/36, F16C 33/64, F16C 43/08

(54) **VERFAHREN ZUR FERTIGUNG EINER KEGELROLLENBAUGRUPPE SOWIE KEGELROLLENBAUGRUPPE UND KEGELROLLENLAGER**
METHOD OF MANUFACTURING A TAPERED ROLLER BEARING SUB-UNIT AS WELL AS TAPERED ROLLER BEARING SUB-UNIT
PROCÉDÉ DE FABRICATION D' UN ENSEMBLE DE PALIER À ROULEAUX CÔNIQUES ET ENSEMBLE DE PALIER À ROULEAUX CÔNIQUES

(30) Priorität: 17.08.2015 DE 102015215610
(43) Veröffentlichungstag der Anmeldung: 27.06.2018
(73) Patentinhaber: Schaeffler Technologies AG & Co. KG, 91074 Herzogenaurach (DE)
(72) Erfinder: MANTAU, Markus, 90617 Puschendorf (DE); KICK-RODENBÜCHER, Reinhard, 90455 Nürnberg (DE); SCHADE, Andre, 96049 Bamberg (DE)
(86) Internationale Anmeldenummer: PCT/DE2016/200265
(87) Internationale Veröffentlichungsnummer: WO 2017/028847

(56) Entgegenhaltungen:
- DE-A1- 3 116 115
- DE-A1-102005 019 481
- JP-A- 2015 025 503

## Beschreibung

Die Erfindung betrifft ein Verfahren zur Fertigung einer Kegelrollenbaugruppe, wobei das Verfahren die Schritte umfasst: Bereitstellung des Innenrings, wobei der Innenring einen Bördelmontagebord aufweist; Montieren eines Rollenkranzes auf dem Innenring, wobei der Rollenkranz über den Bördelmontagebord auf den Innenring aufgeschoben wird; und Umbördeln des Bördelmontagebords in einen Bördelbord, wobei der Bördelbord als ein Haltebord den Rollenkranz verliersicher hält. Ferner betrifft die Erfindung eine Kegelrollenbaugruppe, welche durch das Verfahren gefertigt ist, sowie ein mit der Kegelrollenbaugruppe gebildetes Kegelrollenlager.

Kegelrollenlager weisen in vielen Bauformen einen Innenring, einen Außenring sowie eine Mehrzahl zwischen Innenring und Außenring abwälzend angeordnete Kegelrollen auf. Die Kegelrollen sind oft in einem Käfig geführt. Die Fertigung von Innenring und Außenring kann beispielsweise spanabhebend umgesetzt werden, wobei die Innenringe aus einem Halbzeug trennend herausgearbeitet werden. Andere Möglichkeiten sehen vor, die Ringe umformtechnisch zu fertigen.

So offenbart die Druckschrift DE 102011005326 A1 ein Verfahren zur Herstellung eines Lagerrings, insbesondere eines Kegelrollenlagerrings, wobei ausgehend von einer kreisringförmigen Scheibe ein Ausbilden von einem im Wesentlichen zylindrischen Lagerring und ein Herstellen einer Laufbahn des Lagerrings in einem einzigen Arbeitsschritt durch einen Umformgang, insbesondere ein Fließpressen, erfolgt.

Die DE1014795 B offenbart ein Nadellager mit beidseitiger axialer Führung des Nadelkranzes durch einen gehärteten Lagerring mit zu beiden Seiten angeformten Borden. Einer der Borde wird nach dem axialen Zusammenführen des Käfigs und des Lagerrings angeformt, wobei sich das Material im Bereich dieses Bordes in weichem Zustand befindet und erst nach dem Umformen gehärtet wird. Der Lagerring weist im Bereich des nach Montage des Käfigs gebildeten Bords eine verringerte Wandstärke auf.

Die JP 2015-025503 A beschreibt ein Kegelrollenlager sowie ein Verfahren zu dessen Herstellung, wobei ein Innenring bereitgestellt wird, der einen Kleinflansch und einen Großflansch aufweist. Es erfolgt eine Montage eines Rollenkranzes auf dem Innenring, wobei der Rollenkranz über den weichgeglühten Kleinflansch auf den Innenring aufgeschoben wird und der Kleinflansch anschließend umgeformt wird, um als ein Haltebord den Rollenkranz verliersicher zu halten. Dabei wird der Kleinflansch in einem Umformschritt in Richtung der Kegelrollen umgelegt, wobei hohe Umformgrade erreicht werden. Dabei werden bereits vorhandene Oberflächendefekte im Bereich der stärksten Verformung noch verstärkt. Auch treten dort zusätzliche Defekte im Material des Innenrings auf, wie Risse oder Fältelungen die zu einer weiteren Schwächung des umgebördelten Kleinflansches führen.

Es ist Aufgabe der vorliegenden Erfindung, ein Verfahren zur Fertigung einer Kegelrollenbaugruppe vorzuschlagen, welche besonders einfach und sicher montiert werden kann. Diese Aufgabe wird durch ein Verfahren mit den Merkmalen des Anspruchs 1 sowie durch eine Kegelrollenbaugruppe mit den Merkmalen des Anspruchs 10 gelöst. Weiterhin ist es Aufgabe der Erfindung, ein Kegelrollenlager mit einer solchen Kegelrollenbaugruppe bereitzustellen. Bevorzugte oder vorteilhafte Ausführungsformen der Erfindung ergeben sich aus den Unteransprüchen, der nachfolgenden Beschreibung sowie den beigefügten Figuren.

Die Aufgabe wird für das Verfahren zur Fertigung einer Kegelrollenbaugruppe mit einem Innenring und einem Rollenkranz dadurch gelöst, dass das Verfahren die Schritte umfasst:
a) Bereitstellung des Innenrings, wobei der Innenring einen Bördelmontagebord aufweist, der im Rahmen einer Bördelvorstufe durch ein Umbördeln eines Randbereichs des Innenrings gefertigt wird;
b) Montieren des Rollenkranzes auf dem Innenring, wobei der Rollenkranz über den Bördelmontagebord auf den Innenring aufgeschoben wird;
c) Umbördeln des Bördelmontagebords in einen Bördelbord, wobei der Bördelbord als ein Haltebord den Rollenkranz verliersicher hält;
d) Wärmebehandeln des Bördelmontagebords vor Schritt b) oder Schritt c), wobei eine Härte des Bördelmontagebords gegenüber einer Härte einer Laufbahn des Innenrings herabgesetzt wird.

Gegenstand der Erfindung ist ein Verfahren zur Fertigung einer Kegelrollenbaugruppe. Die Kegelrollenbaugruppe weist einen Innenring sowie einen Rollenkranz auf. Der Rollenkranz umfasst eine Mehrzahl von Kegelrollen sowie einen Käfig, in dem die Kegelrollen gehalten sind. Vorzugsweise ist vorgesehen, dass der Innenring und der Käfig die Kegelrollen verliersicher in radialer Richtung halten. So sind die Kegelrollen radial nach innen durch den Innenring abgestützt und radial nach außen durch den Käfig verliersicher gefangen. Der Innenring weist einen Bördelbord und eine Laufbahn auf, auf der die Kegelrollen abwälzen. Optional weist der Innenring weiterhin einen Festbord auf. Die Laufbahn ist in axialer Richtung zwischen dem Bördelbord und dem Festbord angeordnet. Die Laufbahn weist vorzugsweise eine kegelstumpfförmige oder konusförmige Oberfläche auf. Vorzugsweise ist der Innenring aus Stahl, insbesondere einem härtbaren Stahl gefertigt. An der Innenumfangsfläche ist der Innenring vorzugsweise gerade, hohlzylinderförmig ausgebildet. Der Rollenkranz ist zwischen dem Bördelbord und dem Festbord angeordnet, insbesondere derart, dass der Rollenkranz in beide axiale Richtungen formschlüssig gefangen ist. Insbesondere ist die Kegelrollenbaugruppe umfassend den Innenring und den Rollenkranz als eine selbsthaltende Baugruppe ausgebildet, welche einfach zu transportieren und/oder zu montieren ist, da keine Bestandteile der Kegelrollenbaugruppe verloren gehen können.

Das Verfahren umfasst mindestens die folgenden Schritte:
Zunächst wird der Innenring in einer Bördelvorstufe bereitgestellt, wobei der Innenring einen Bördelmontagebord und optional ergänzend den Festbord aufweist. Der Bördelmontagebord und der Festbord sind an axial gegenüberliegenden Enden des Innenrings angeordnet. Zwischen dem Bördelmontagebord und dem Festbord ist die Laufbahn für die Kegelrollen angeordnet. Der Bördelmontagebord ist vorzugsweise als ein axialer Endabschnitt des Innenrings ausgebildet, welcher gegenüber einer insbesondere gedachten, zylinderförmigen Verlängerung des Innenrings radial nach außen aufgeweitet ist. In einem Längsschnitt durch den Innenring entlang einer Drehachse des Innenrings verläuft der Bördelmontagebord ab dem Übergang von der Laufbahn des Innenrings radial nach außen. Radial innenseitig und/oder außenseitig ist der Bördelmontagebord zum Beispiel kegelförmig oder konusförmig ausgebildet.

In einem nachfolgenden Schritt einer Montagestufe wird der Rollenkranz auf dem Innenring montiert, wobei der Rollenkranz über den Bördelmontagebord auf den Innenring aufgeschoben wird. Der Rollenkranz ist vorzugsweise als ein vormontierter Rollenkranz ausgebildet, wobei bereits alle Kegelrollen in dem Käfig angeordnet sind. Die Kegelrollen sind durch den Käfig gegen ein Herausfallen in radialer Richtung nach außen gesichert. Anders ausgedrückt sind die Kegelrollen in dem Käfig in Bezug auf radial außen gefangen. Damit wird der Rollenkranz umfassend den Käfig und die Kegelrollen, insbesondere alle Kegelrollen, über den Bördelmontagebord auf den Innenring aufgeschoben. Es ist insbesondere vorgesehen, dass der Käfig des Rollenkranzes bei dem Aufschieben nicht aufgebeult oder anders verformt wird, sondern dass der Käfig mit den Kegelrollen und somit der Rollenkranz so dimensioniert ist, dass dieser mit Übermaß über den Bördelmontagebord auf den Innenring, vorzugsweise deformationsfrei, aufgeschoben wird.

In einem nachfolgenden Schritt einer Bördelendstufe erfolgt ein Umbördeln des Bördelmontagebords, sodass der Bördelbord entsteht. Der Bördelbord ist als ein Haltebord ausgebildet, welcher den Rollenkranz insbesondere in axialer Richtung verliersicher und/oder formschlüssig hält. Insbesondere wird der Bördelmontagebord weiter in Richtung der Laufbahn umgelegt, sodass der Rollenkranz in oder auf dem Innenring gefangen ist.

Es ist dabei ein Vorteil der Erfindung, dass der Bördelbord in zwei Schritten entsteht, wobei zunächst der Bördelmontagebord gefertigt wird, nachfolgend der Rollenkranz montiert und dann erst das Umformen in den Bördelbord erfolgt. Auf diese Weise kann die Kegelrollenbaugruppe einfach montiert werden, ohne dass der Käfig des Rollenkranzes ausgebeult oder anders deformiert werden muss. Trotzdem ist nach dem Verfahrensabschluss der Rollenkranz in oder an dem Innenring verliersicher gehalten, sodass die Kegelrollenbaugruppe transportiert und montiert werden kann, ohne dass das Risiko besteht, dass Komponenten oder Teile der Kegelrollenbaugruppe verloren gehen.

Gemäß der Erfindung wird der Bördelmontagebord, insbesondere lokal, wärmebehandelt, um die Härte des Bördelmontagebords für das Umbördeln in den Bördelbord herabzusetzen. Insbesondere wird der Innenring ausschließlich im Bereich des Bördelmontagebords, im Speziellen im Biegebereich der Bördelendstufe, lokal wärmebehandelt. Dagegen ist die Wärmebehandlung vorzugsweise so umgesetzt, dass die Härte der Laufbahn unverändert bleibt. Besonders bevorzugt ist durch die Wärmebehandlung die Härte des Bördelmontagebords, insbesondere im Bereich der Formänderung des Umbördelns in der Bördelendstufe, im Vergleich zu der Laufbahn des Innenrings niedriger ausgebildet. Aufgrund des zweistufigen Umbördelns und der Wärmebehandlung zwischen den beiden Bördelvorgängen ist die Materialverfestigung im Randbereich des Innenrings in der Bördelendstufe soweit reduziert, dass ein Risiko einer Materialschädigung, insbesondere eine Riss- oder Faltenbildung, in diesem Bereich des Innenrings minimiert wird. Dadurch treten bei der Montage einer erfindungsgemäßen Kegelrollenbaugruppe, wobei der Innenring auf eine Welle aufgeschoben wird, im Bereich des Bördelbords keine Schädigungen am Bördelbord auf, da dieser aufgrund der zweistufigen Verfahrensweise eine noch ausreichende Restduktilität aufweist, um einem daran angedrückten Montagewerkzeug elastisch nachzugeben. Weiterhin ist in vorteilhafter Weise auch die Montagezeit in der Bördelendstufe aufgrund des geringeren Weges, um den der vorgebördelte Bördelmontagebord noch weiter umgeformt werden muss, reduziert. Die Grundhärte des Innenrings ohne lokale Wärmebehandlung kann zum einen durch die Herstellung des Innenrings bedingt sein. So treten beispielsweise bei einer umformtechnischen Herstellung wie einem bevorzugten Kaltfließpressen Spannungen auf, welche zu einer Materialverfestigung führen. Alternativ oder ergänzend kann der Innenring auch in seiner Gesamtheit gehärtet sein, wobei durch die lokale Wärmebehandlung lokal die Härte wieder herabgesetzt wird. Es kann auch sein, dass das Grundmaterial des Innenrings eine Grundhärte aufweist, welche durch die insbesondere lokale Wärmebehandlung reduziert wird.

Die Wärmebehandlung kann wahlweise vor der Montage des Rollenkranzes oder nach der Montage des Rollenkranzes durchgeführt werden. Es ist jedoch bevorzugt, die Wärmebehandlung vor der Montage des Rollenkranzes durchzuführen, um Probleme hinsichtlich der Zugänglichkeit zu vermeiden, da der Rollenkranz gegebenenfalls eine Störkontur für die Wärmebehandlung darstellt.

Der Vorteil der, insbesondere lokalen, Wärmebehandlung liegt darin, dass zum einen das Umbördeln des Bördelmontagebords in dem Bördelbord vereinfacht wird, da der Biegebereich weniger hart ist. Ferner werden auf diese Weise Brüche im Bereich des Biegebereichs des Bördelmontagebords beziehungsweise des Bördelbords vermieden. Es ist besonders bevorzugt, wenn die Wärmebehandlung als eine Hochfrequenzwärmebehandlung ausgebildet ist.

Gemäß der Erfindung ist der Bördelmontagebord im Rahmen einer Bördelvorstufe durch ein Umbördeln eines Randbereichs des Innenrings gefertigt. Betrachtet man den Innenring im Verlauf der Fertigung, so liegt zunächst ein Randbereich des Innenrings vor, welcher sich zum Beispiel hohlzylinderartig in axialer Richtung erstreckt. In der Bördelvorstufe wird der Randbereich umgebördelt und in Richtung Laufbahn umgelegt, sodass die anschließende Montage des Rollenkranzes erfolgen kann.

Es ist dabei bevorzugt, wenn der Bördelmontagebord in der Bördelvorstufe derart ausgebildet wird, dass dieser mit der Laufbahn des Innenrings einen Winkel einschließt, der im Bereich von 90 bis 180° liegt.

Nach der Montage des Rollenkranzes erfolgt die Bördelendstufe, wobei der Bördelmontagebord weiter in Richtung Laufbahn umgelegt wird, um den Bördelbord zu bilden. Der Bördelbord wird dabei insbesondere derart ausgebildet, dass dieser mit der Laufbahn des Innenrings einen Winkel einschließt, der im Bereich von kleiner 90° liegt.

Fertigungstechnisch betrachtet ist es bevorzugt, dass das Umbördeln in der Bördelvorstufe über einen in axialer Richtung verfahrbaren Bördelstempel umgesetzt wird, welcher eine Axialkraft auf den Randbereich des Innenrings aufbringt, um diesen in den Bördelmontagebord zu verformen.

Es ist besonders bevorzugt, dass der Innenring mit dem Randbereich mittels Kaltfließpressens gefertigt ist. Besonders bevorzugt wird zum Kaltfließpressen eine Umformeinrichtung eingesetzt. Dabei ist es besonders bevorzugt, wenn der kaltfließgepresste Innenring, insbesondere im Bereich seiner Laufbahn, keine durch Materialtrennprozesse beeinflusste Oberflächen aufweist.

Bei einer bevorzugten Weiterbildung des Verfahrens erfolgt das Umbördeln in die Bördelvorstufe, wenn der Innenring mit dem Randbereich noch in der Umformeinrichtung eingelegt ist. In dieser Position ist der Innenring lagedefiniert, sodass der Randbereich mit ausreichend hoher Genauigkeit in den Bördelmontagebord umgeformt werden kann.

Besonders bevorzugt weist die Umformeinrichtung mindestens ein Werkzeugteil, welches zumindest die Laufbahn abbildet, sowie einen Umformstempel auf, wobei der Umformstempel in axialer Richtung bewegt wird. Es ist dabei besonders bevorzugt, dass der Bördelstempel in die Gegenrichtung bewegt wird.

Besonders bevorzugt wird der Innenring mit dem Randbereich aus einer Kreisringscheibe, insbesondere einer ebenen Kreisringscheibe, gefertigt, welche mit der Umformeinrichtung in den Innenring durch Kaltfließpressen umgeformt wird.

Ein weiterer Gegenstand der Erfindung betrifft die Kegelrollenbaugruppe, welche nach dem erfindungsgemäßen Verfahren gefertigt ist. Der aus dem Verfahren resultierende Härteverlauf in dem Innenring mit dem Bördelbord, wie er in der Kegelrollenbaugruppe verbaut ist, ist charakteristisch und kann den Einsatz des erfindungsgemäßen Verfahrens nachweisen.

Dabei ist es für die Kegelrollenbaugruppe bevorzugt, wenn der insbesondere kaltfließgepresste Innenring im Bereich der Laufbahn eine maximale Dicke von 6 mm aufweist. Weiterhin weist der insbesondere kaltfließgepresste Innenring im Randbereich bevorzugt eine Dicke auf, die wenigstens 25% dieser maximalen Dicke der Laufbahn entspricht.

Die Aufgabe wird weiterhin gelöst für ein Kegelrollenlager umfassend eine erfindungsgemäße Kegelrollenbaugruppe sowie einen Außenring. Für das Kegelrollenlager gelten die gleichen Vorteile wie für die erfindungsgemäße Kegelrollenbaugruppe, wie sie bereits oben genannt wurden.

Der Außenring des Kegelrollenlagers ist insbesondere ein kaltfließgepresster Außenring.

Besonders bevorzugt ist ein Kegelrollenlager, bei dem der Innenring und der Außenring durch Kaltfließpressen hergestellt sind und, insbesondere im Bereich der Laufbahn des Innenrings und einer Laufbahn des Außenrings, keine durch Materialtrennprozesse beeinflusste Oberflächen aufweisen. Ein solches Lager ist besonderes schnell und kostensparend herzustellen und weist eine ausgezeichnete Montierbarkeit und Haltbarkeit auf.

Weitere Merkmale, Vorteile und Wirkungen der Erfindung ergeben sich aus der nachfolgenden Beschreibung bevorzugter Ausführungsbeispiele der Erfindung sowie den beigefügten Figuren. Dabei zeigen:
- Figur 1: ein Flussdiagramm mit mehreren Schritten eines Verfahrens zur Fertigung einer Kegelrollenbaugruppe;
- Figur 2: eine Umformeinrichtung im Halbschnitt zur Fertigung eines Innenrings für die Kegelrollenbaugruppe in stark schematisierter Darstellung; und
- Figur 3: ein erfindungsgemäßes Kegelrollenlager im Halbschnitt.

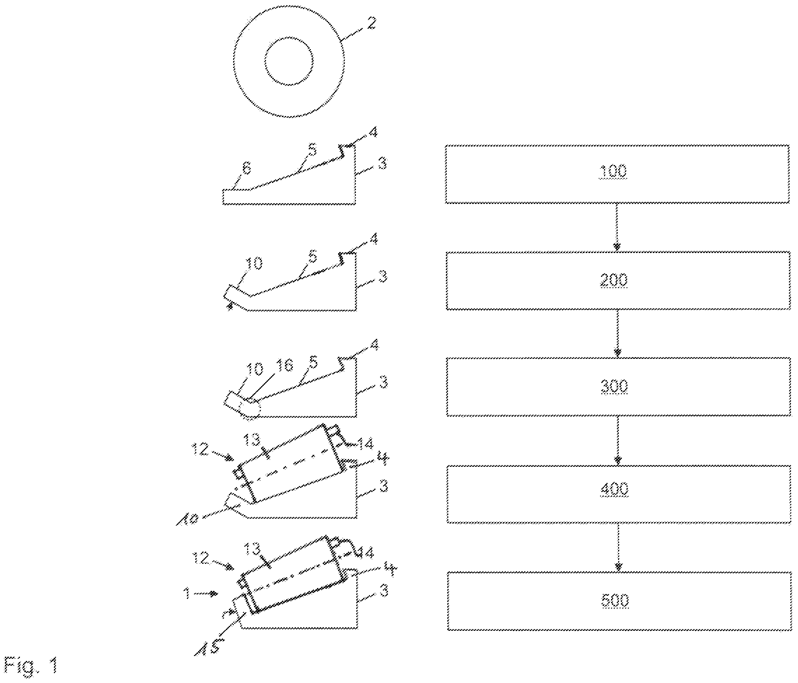

Die Figur 1 zeigt auf der rechten Seite ein Flussdiagramm mit mehreren Schritten zur Fertigung einer Kegelrollenbaugruppe 1. Auf der linken Seite sind schematisiert die Ausgangsprodukte beziehungsweise Zwischenprodukte zur Fertigung der Kegelrollenbaugruppe 1 im Halbschnitt dargestellt.

Das Verfahren kann beispielhaft ausgehen von einer Kreisringscheibe 2, welche aus einem vorzugsweise härtbaren Stahl gefertigt ist. Die Kreisringscheibe 2 ist als eine ebene Scheibe ausgebildet und kann beispielsweise aus einer Ronde herausgetrennt werden. In einem Schritt 100, welcher als eine Umformstufe ausgebildet ist, wird die Kreisringscheibe 2 durch Kaltfließpressen in einen Innenring 3 umgeformt, wobei der Innenring 3 einen Festbord 4, eine konisch verlaufende Laufbahn 5 sowie ein in einer axialen Richtung verlaufenden Randbereich 6 aufweist. Der Randbereich 6 ist als ein hohlzylinderförmiger Endabschnitt des Innenrings 3 ausgebildet.

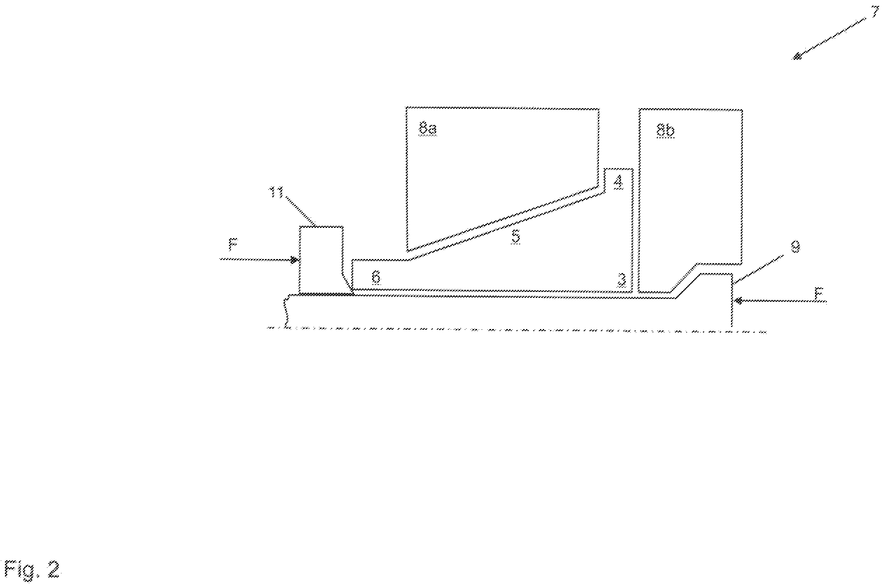

Beispielsweise kann der Innenring 3 in dem Zustand nach dem Schritt 100 in einer Umformeinrichtung 7, wie diese in der Figur 2 schematisiert im Halbschnitt dargestellt ist, gefertigt werden. Die Umformeinrichtung 7 weist zwei Werkzeugteile 8a, b auf, wobei das Werkzeugteil 8a die Laufbahn 5 des Innenrings 3 und das Werkzeugteil 8b eine Stirnseite des Innenrings 3 am Festbord 4 ausbildet. Zwischen die Werkzeugteile 8a und 8b wird die Kreisringscheibe 2 eingelegt und mittels eines zentralen Umformstempels 9 durch Kaltfließpressen in die Form des Innenrings 3 umgeformt. Dabei wird der Randbereich 6 durch einen Ringspalt zwischen dem Werkzeugteil 8a und dem Umformstempel 9 gebildet.

In einem Schritt 200, welcher als eine Bördelvorstufe ausgebildet ist, wird der Randbereich 6 in Richtung der Laufbahn 5 umgelegt oder gebördelt. Es entsteht dabei ein Bördelmontagebord 10, welcher an der radialen Innenseite und an der radialen Außenseite jeweils eine konische, umlaufende Fläche aufweist. Der Randbereich 6 ist durch das Umformen in der Bördelvorstufe im Schritt 200 ausgehend von der hohlzylindrischen Form in eine Trichterform umgeformt worden.

In der Figur 2 ist eine mögliche Umsetzung des Schritts 200 gezeigt. Sobald der Innenring 3 mit dem Randbereich 6 gefertigt ist, wird ein Bördelstempel 11 in axialer Richtung zugestellt, sodass der Randbereich 6 in der beschriebenen Weise zu dem Bördelmontagebord 10 umgeformt wird. Die Zustellrichtung des Bördelstempels 11 ist entgegen der Zustellrichtung des Umformstempels 9, dargestellt durch die jeweils mittels Bördelstempel 11 und Umformstempel 9 aufgebrachten und entgegengesetzt wirkenden Kräfte F.

In einem Schritt 300, welcher als eine Wärmebehandlungsstufe ausgebildet ist, erfolgt eine lokale Wärmebehandlung des Bördelmontagebords 10 und zwar insbesondere in dem Anschlussbereich 16 zu der Laufbahn 5. Die lokale Wärmebehandlung kann beispielsweise durch eine Hochfrequenzwärmebehandlung erfolgen. Durch die lokale Wärmebehandlung wird der Anschlussbereich 16 des Bördelmontagebords 10 weicher als zum Beispiel die Laufbahn 5 gemacht, sodass ein weiteres Umbördeln des Bördelmontagebords 10 vereinfacht wird. Ferner werden Brüche und Risse beim weiteren Umbördeln vermieden.

In einem Schritt 400, welcher als eine Montagestufe ausgebildet ist, erfolgt eine Montage eines Rollenkranzes 12, wobei der Rollenkranz 12 eine Mehrzahl von Kegelrollen 13 sowie einen Käfig 14 umfasst, in dem die Kegelrollen 13 angeordnet sind. Der Käfig 14 ist so ausgebildet, dass die Kegelrollen 13 zwischen dem Käfig 14 und der Laufbahn 5 verliersicher gehalten sind. Insbesondere können die Kegelrollen 13 nicht in einer radialen Richtung nach außen aus dem Käfig 14 austreten. Die Geometrie des Bördelmontagebords 10 ist so gewählt, dass der durch den Bördelmontagebord 10 gebildete Störkonturdurchmesser kleiner ist als ein freier Durchmesser des Rollenkranzes 12, sodass der Rollenkranz 12 ohne Verformung des Käfigs 14 auf den Innenring 3 aufgeschoben beziehungsweise montiert werden kann. Insbesondere werden durch die Wahl einer geeigneten Dimensionierung Beschädigungen an dem Käfig 14 in der Montagestufe vermieden.

In einem Schritt 500, welcher als eine Bördelendstufe ausgebildet ist, wird der Bördelmontagebord 10 in einen Bördelbord 15 weiter umgebogen bzw. gebördelt. Somit wird der Randbereich 6 in zwei Schritten in Richtung der Laufbahn 5 umgelegt. Der Bördelbord 15 ist als ein Haltebord ausgebildet, welcher den Rollenkranz 12, umfassend die Kegelrollen 13 und den Käfig 14 unverlierbar hält. Dadurch ist das Endprodukt, nämlich die Kegelrollenbaugruppe 1, als eine selbsthaltende Baugruppe ausgebildet, welche einfach transportiert und montiert werden kann.

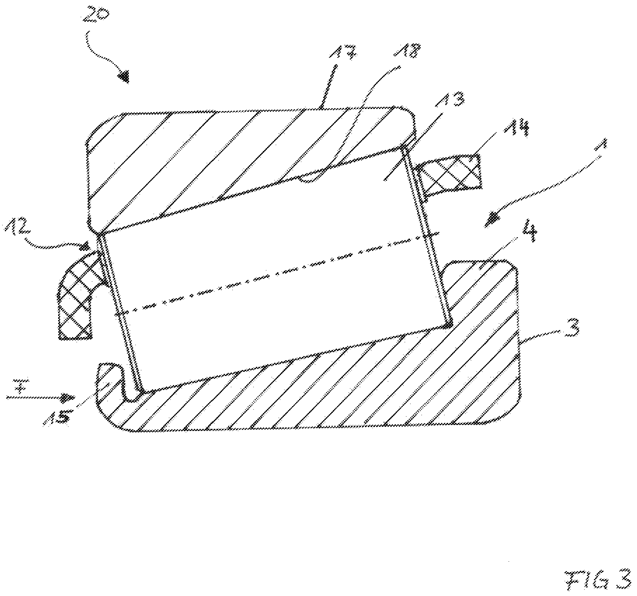

Figur 3 zeigt ein Kegelrollenlager 20 im Halbschnitt mit einer Kegelrollenbaugruppe 1 gemäß Figur 1, Schritt 500, nach der Bördelendstufe. Es ist der Rollenkranz 12 umfassend den Käfig 14 und die Kegelrollen 13 sowie weiterhin der Innenring 3 mit Festbord 4 und Bördelbord 15 erkennbar. Weiterhin ist ein Außenring 17 mit einer Laufbahn 18 vorgesehen. Bei einer Montage des Kegelrollenlagers 20 auf einer Welle, wobei der Innenring 3 auf die Welle aufgeschoben wird, wird ein Montagewerkzeug im Bereich des Bördelbords 15 axial mit einer Kraft F gegen den Innenring 3 gedrückt. Im Bereich des Bördelbords treten dadurch keine Schädigungen auf, da dieser aufgrund der zweistufigen Verfahrensweise und der damit einhergehenden reduzierten Materialverfestigung in der Bördelendstufe eine noch ausreichende Restduktilität aufweist, um dem daran angedrückten Montagewerkzeug elastisch nachzugeben.

### Bezugszeichenliste

- 1: Kegelrollenbaugruppe
- 2: Kreisringscheibe
- 3: Innenring
- 4: Festbord
- 5: Laufbahn
- 6: Randbereich
- 7: Umformeinrichtung
- 8a, b: Werkzeugteile
- 9: Umformstempel
- 10: Bördelmontagebord
- 11: Bördelstempel
- 12: Rollenkranz
- 13: Kegelrollen
- 14: Käfig
- 15: Bördelbord
- 16: Anschlussbereich
- 17: Außenring
- 18: Laufbahn
- 20: Kegelrollenlager
- F: Kraft

## Patentansprüche

1. Verfahren zur Fertigung einer Kegelrollenbaugruppe (1) mit einem Innenring (3) und einem Rollenkranz (12), wobei das Verfahren die Schritte umfasst:
a) Bereitstellung des Innenrings (3), wobei der Innenring (3) einen Bördelmontagebord (10) aufweist, der im Rahmen einer Bördelvorstufe durch ein Umbördeln eines Randbereichs (6) des Innenrings (3) gefertigt wird;
b) Montieren des Rollenkranzes (12) auf dem Innenring (3), wobei der Rollenkranz (12) über den Bördelmontagebord (10) auf den Innenring (3) aufgeschoben wird;
c) Umbördeln des Bördelmontagebords (10) in einen Bördelbord (15), wobei der Bördelbord (15) als ein Haltebord den Rollenkranz (12) verliersicher hält;
d) Wärmebehandeln des Bördelmontagebords (10) vor Schritt b) oder Schritt c), wobei eine Härte des Bördelmontagebords (10) gegenüber einer Härte einer Laufbahn (5) des Innenrings (3) herabgesetzt wird.

2. Verfahren nach Anspruch 1, wobei der Bördelmontagebord (10) in der Bördelvorstufe derart ausgebildet wird, dass dieser mit der Laufbahn (6) des Innenrings (3) einen Winkel einschließt, der im Bereich von 90 bis 180° liegt..

3. Verfahren nach Anspruch 1 oder Anspruch 2, wobei der Bördelbord (15) derart ausgebildet wird, dass dieser mit der Laufbahn (6) des Innenrings (3) einen Winkel einschließt, der im Bereich von kleiner 90° liegt..

4. Verfahren nach einem der Ansprüche 1 bis 3, wobei die Wärmebehandlung als eine HF-Wärmebehandlung ausgeführt wird.

5. Verfahren nach einem der vorhergehenden Ansprüche, wobei als Innenring (3) ein kaltfließgepresster Innenring (3) eingesetzt wird.

6. Verfahren nach Anspruch 5, wobei der kaltfließgepresste Innenring (3), insbesondere im Bereich der Laufbahn (5), keine durch Materialtrennprozesse beeinflusste Oberflächen aufweist.

7. Verfahren nach einem der Ansprüche 1 bis 6, wobei das Umbördeln des Bördelmontagebords (10) in der Bördelvorstufe über einen in axialer Richtung bewegten Bördelstempel (11) umgesetzt wird.

8. Verfahren nach Anspruch 6, **dadurch gekennzeichnet, dass** ein Kaltfließpressen des Innenrings (3) durch eine Umformeinrichtung (7) mit mindestens einem Werkzeugteil (8a) erfolgt, welches zumindest die Laufbahn (5) abbildet, wobei die Umformeinrichtung (7) einen Umformstempel (9) aufweist, wobei der Umformstempel (9) in axialer Richtung bewegt wird.

9. Verfahren nach Anspruch 8, **dadurch gekennzeichnet, dass** der Bördelstempel (11) und der Umformstempel (9) gegenläufig verfahren werden.

10. Kegelrollenbaugruppe (1), **dadurch gekennzeichnet, dass** die Kegelrollenbaugruppe (1) nach dem Verfahren gemäß mindestens einer der vorhergehenden Ansprüche gefertigt ist.

11. Kegelrollenbaugruppe nach Anspruch 10, wobei der Innenring (3) im Bereich der Laufbahn (5) eine maximale Dicke von 6 mm aufweist.

12. Kegelrollenbaugruppe nach Anspruch 11, wobei der Innenring (3) im Randbereich (6) eine Dicke aufweist, die wenigstens 25% der maximalen Dicke der Laufbahn (5) entspricht.

13. Kegelrollenlager (20), umfassend eine Kegelrollenbaugruppe (1) nach einem der Ansprüche 10 bis 12 sowie einen Außenring (17).

14. Kegelrollenlager (20) nach Anspruch 13, wobei der Außenring (17) ein kaltfließgepresster Außenring (17) ist.

15. Kegelrollenlager (20) nach Anspruch 13, wobei der Innenring (3) und der Außenring (17) durch Kaltfließpressen hergestellt sind und, insbesondere im Bereich der Laufbahn (5) des Innenrings (3) und einer Laufbahn (18) des Außenrings (17), keine durch Materialtrennprozesse beeinflusste Oberflächen aufweisen.

## Claims

1. Method for manufacturing a tapered roller bearing sub-group (1) having an inner ring (3) and a roller-and-cage assembly (12), wherein the method comprises the following steps:
a) providing the inner ring (3), wherein the inner ring (3) has a flange assembly rim (10) which in the context of a pre-flanging stage is manufactured by beading a peripheral region (6) of the inner ring (3);
b) assembling the roller-and-cage assembly (12) on the inner ring (3), wherein the roller-and-cage assembly (12) is push-fitted over the flange assembly rim (10) onto the inner ring (3);
c) beading the flange assembly rim (10) so as to form a flange rim (15), wherein the flange rim (15) as a retaining rim captively holds the roller-and-cage assembly (12);
d) heat-treating the flange assembly rim (10) prior to step b) or step c), wherein a hardness of the flange assembly rim (10) is reduced in comparison to a hardness of a raceway (5) of the inner ring (3) .

2. Method according to Claim 1, wherein the flange assembly rim (10) in the pre-flanging stage is configured in such a manner that said flange assembly rim (10), conjointly with the raceway (6) of the inner ring (3), encloses an angle which is in the range from 90 to 180°.

3. Method according to Claim 1 or Claim 2, wherein the flange rim (15) is configured in such a manner that said flange rim (15), conjointly with the raceway (6) of the inner ring (3), encloses an angle which is in the range of less than 90°.

4. Method according to one of Claims 1 to 3, wherein the heat treatment is carried out as a HF heat treatment.

5. Method according to one of the preceding claims, wherein a cold-impact-extruded inner ring (3) is used as the inner ring (3).

6. Method according to Claim 5, wherein the cold-impact-extruded inner ring (3), in particular in the region of the raceway (5), does not have any surfaces that are influenced by material-separating processes.

7. Method according to one of Claims 1 to 6, wherein the beading of the flange assembly rim (10) in the pre-flanging stage is implemented by way of a flanging ram (11) that is moved in the axial direction.

8. Method according to Claim 6, **characterized in that** cold-impact-extruding of the inner ring (3) is performed by a forming installation (7) having at least one tool part (8a) which represents at least the raceway (5), wherein the forming installation (7) has a forming ram (9), wherein the forming ram (9) is moved in the axial direction.

9. Method according to Claim 8, **characterized in that** the flanging ram (11) and the forming ram (9) are displaced in an opposing manner.

10. Tapered roller bearing sub-group (1), **characterized in that** the tapered roller bearing sub-group (1) is manufactured by the method according to at least one of the preceding claims.

11. Tapered roller bearing sub-group according to Claim 10, wherein the inner ring (3) in the region of the raceway (5) has a maximum thickness of 6 mm.

12. Tapered roller bearing sub-group according to Claim 11, wherein the inner ring (3) in the peripheral region (6) has a thickness which corresponds to at least 25% of the maximum thickness of the raceway (5) .

13. Tapered roller bearing (20), comprising a tapered roller bearing sub-group (1) according to one of Claims 10 to 12, and an outer ring (17).

14. Tapered roller bearing (20) according to Claim 13, wherein the outer ring (17) is a cold-impact-extruded outer ring (17).

15. Tapered roller bearing (20) according to Claim 13, wherein the inner ring (3) and the outer ring (17) are produced by cold-impact-extrusion and, in particular in the region of the raceway (5) of the inner ring (3) and of a raceway (18) of the outer ring (17), do not have any surfaces that are influenced by material-separating processes.

## Revendications

1. Procédé de fabrication d'un ensemble de rouleaux coniques (1) comprenant une bague intérieure (3) et une couronne de rouleaux (12), le procédé comprenant les étapes suivantes :
a) fournir la bague intérieure (3), la bague intérieure (3) comportant un bord de montage bridé (10) qui est réalisé dans le cadre d'une phase préalable de bridage par rabattement d'une région de bord (6) de la bague intérieure (3) ;
b) monter la couronne de rouleaux (12) sur la bague intérieure (3), la couronne de rouleaux (12) étant amenée par coulissement sur la bague intérieure (3) par le biais du bord de montage bridé (10) ;
c) rabattre le bord de montage bridé (10) dans un bord bridé (15), le bord bridé (15) retenant la couronne de rouleaux (12) de manière captive sous la forme d'un bord de retenue ;
d) traiter thermiquement le bord de montage bridé (10) avant l'étape b) ou l'étape c), la dureté du bord de montage bridé (10) étant diminuée par rapport à la dureté d'un chemin de roulement (5) de la bague intérieure (3).

2. Procédé selon la revendication 1, le bord de montage bridé (10) étant conçu dans la phase préalable de bridage de manière à former avec le chemin de roulement (6) de la bague intérieure (3) un angle dans la gamme allant de 90 à 180°.

3. Procédé selon la revendication 1 ou la revendication 2, le bord bridé (15) étant conçu de manière à former un angle avec le chemin de roulement (6) de la bague intérieure (3) dans la gamme inférieure à 90°.

4. Procédé selon l'une des revendications 1 à 3, le traitement thermique étant réalisé sous la forme d'un traitement thermique HF.

5. Procédé selon l'une des revendications précédentes, une bague intérieure extrudée à froid (3) étant utilisée comme bague intérieure (3).

6. Procédé selon la revendication 5, la bague intérieure extrudée à froid (3) ne comportant, en particulier dans la région du chemin de roulement (5), aucune surface affectée par des processus de séparation des matériaux.

7. Procédé selon l'une des revendications 1 à 6, le rabattement du bord de montage bridé (10) est mis en oeuvre dans la phase préalable de bridage par une matrice de bridage (11) déplacée dans la direction axiale.

8. Procédé selon la revendication 6, **caractérisé en ce qu'**une extrusion à froid de la bague intérieure (3) est effectuée par un moyen de formage (7) comportant au moins une partie outil (8a) qui reproduit au moins le chemin de roulement (5), le moyen de formage (7) comportant une matrice de formage (9), la matrice de formage (9) étant déplacée dans la direction axiale.

9. Procédé selon la revendication 8, **caractérisé en ce que** la matrice de bridage (11) et la matrice de formage (9) sont déplacées dans des directions opposées.

10. Ensemble de rouleaux coniques (1), **caractérisé en ce que** l'ensemble de rouleaux coniques (1) est fabriqué selon le procédé de l'une au moins des revendications précédentes.

11. Ensemble de rouleaux coniques selon la revendication 10, la bague intérieure (3) ayant dans la région du chemin de roulement (5) une épaisseur maximale de 6 mm.

12. Ensemble de rouleaux coniques selon la revendication 11, la bague intérieure (3) ayant dans la région de bord (6) une épaisseur qui correspond à au moins 25 % de l'épaisseur maximale du chemin de roulement (5).

13. Palier à rouleaux coniques (20) comprenant un ensemble de rouleaux coniques (1) selon l'une des revendications 10 à 12 et une bague extérieure (17).

14. Palier à rouleaux coniques (20) selon la revendication 13, la bague extérieure (17) étant une bague extérieure extrudée à froid (17).

15. Palier à rouleaux coniques (20) selon la revendication 13, la bague intérieure (3) et la bague extérieure (17) étant fabriquées par extrusion à froid et ne comportant, en particulier dans la région du chemin de roulement (5) de la bague intérieure (3) et d'un chemin de roulement (18) de la bague extérieure (17), aucune surface affectée par des processus de séparation des matériaux.
